# EUROPEAN PATENT APPLICATION

(11) **EP 1 614 708 A1**
(43) Date of publication of application: **11.01.2006**
(21) Application number: 05014754.5
(22) Date of filing: 07.07.2005
(51) Int. Cl.: C08J 5/18, C08L 67/02, B32B 27/36

(54) **Polyester film**

(30) Priority: 09.07.2004 JP 2004202620
(71) Applicant: Mitsubishi Polyester Film Corporation, Tokyo 108-0014 (JP)
(72) Inventor: Suzuki, Kanae, Maibara-shi Shiga (JP); Miki, Takatoshi, Maibara-shi Shiga (JP); Ikeyama, Koichi, Maibara-shi Shiga (JP)
(74) Representative: Schweitzer, Klaus

(57) **Abstract**

The present invention concerns a polyester film comprising a substantially antimony-free polyester, wherein the amount of oligomer in the film is 0.7% by weight or less based on the weight of the film, and wherein the amount of the oligomer on the surface of the film is 5.0 mg/m² or less after coating the film with methyl ethyl ketone driving off the methyl ethyl ketone and subsequently heating the film to 180°C for 10 min.

## Description

The present invention concerns a polyester film and, more specifically, it relates to a polyester film with a reduced amount of an oligomer.

Since films of polyesters - typically represented by polyethylene terephthalate or polyethylene naphthalate - have excellent characteristics such as mechanical strength, dimensional stability, flatness, heat resistance, chemical resistance and optical characteristics and are also excellent in cost performance, they are used in various kinds of applications. However, as their uses have become versatile, fabrication conditions and working conditions of the films have become versatile which resulted in a problem that an oligomer exuding from the inside to the surface of the films precipitated upon heat treatment of the polyester films. When precipitation of the oligomer to the film surface is extensive, it results in various problems, for example, the oligomer is deposited and causes contamination in the steps during film manufacture or the film can not be used in an application which requires high transparency.

In the past, as a method of preventing precipitation of the oligomer, it has been attempted to decrease the oligomer contained in the starting material by solid phase polymerization (JP-A No. 2003-119271), or to improve the hydrolysis resistance of the polyester film by using a terminal blocking agent.

However, even in the starting material which was subjected to solid phase polymerization, precipitation of the oligomer to the film surface could not yet be prevented satisfactorily, probably because of the by-production of the oligomer by heating during film manufacturing.

The use of a terminal blocking agent may cause other problems, such as undesired coloration of the polymer, degradation of the solid phase polymerizability, etc..

In view of the disadvantages of the prior art films it was an object of the present invention to provide a film of excellent film fabrication quality, with a reduced amount of oligomer, reduced precipitation of the oligomer on the surface of the film even when the film surface is coated with a coating layer with a coating agent including an organic solvent or the like. At the same time the transparency of the film should not be lowered even during treatment at a high temperature for a long time.

As a result of intensive studies of the subject described above, the present inventors have found that a film with a reduced amount of oligomer can be provided without deteriorating the excellent characteristics of a polyester film.

Therefore, the object of the present invention is a polyester film which is obtained by melt-extruding a polyester which polyester contains substantially no antimony element and wherein the amount of oligomer in the film is 0.7% by weight or less based on the weight of the film, and wherein the amount of oligomer on the surface of the film is 5.0 mg/m² or less after coating the film with methyl ethyl ketone driving off the methyl ethyl ketone and after a subsequent heat treatment of the film at 180°C for 10 min.

The present invention will now be described in more detail.

The polyester film referred to in the invention is a film obtained by cooling a molten polyester sheet which is melt-extruded from an extrusion die by the so-called extrusion method, and is then optionally stretched.

The polyester from which the film according to the invention is manufactured is made by polycondensating an aromatic dicarboxylic acid and an aliphatic glycol. The aromatic dicarboxylic acid comprises terephthalic acid, 2,6-naphthalene dicarboxylic acid, etc. while the aliphatic glycol comprises ethylene glycol, diethylene glycol, 1,4-cyclohexane dimethanol, etc. Typical polyesters comprise, for example, polyethylene terephthalate (PET) and polyethylene-2,6-naphthalate (PEN).

The polyester may be either a homopolyester or copolyester. In the case of a copolyester, it may be any copolymer containing 30 mol% or less of a third ingredient. The dicarboxylic acid ingredient of such copolyester comprises one or more members selected, for example, from isophthalic acid, phthalic acid, terephthalic acid, 2,6-naphthalene dicarboxylic acid, adipic acid, sebacic acid and oxycarboxylic acid (for example, p-hydroxybenzoic acid). The glycol ingredient comprises one or more members selected, for example, from ethylene glycol, diethylene glycol, propylene glycol, butanediol, 1,4-cyclohexanedimethanol, and neopentyl glycol.

In the invention, "containing substantially no antimony element" (= "substantially antimony-free") means, that the amount of the antimony metal element in the polymer and, thus, in the film is 10 ppm or less.

The term "oligomer" as used herein means a cyclic ester condensate of three polyester precursors, such as bis-ω-hydroxy alkyl ester units or hydroxy alkyl terephthalate units or hydroxy alkyl naphthalate units.

Further, in the polyester film of the present invention, at least one compound selected from titanium compounds and phosphorus compounds is preferably contained. The amount of the titanium element is usually 20 ppm or less and, preferably, 10 ppm or less. The lower limit is usually 1 ppm, preferably, 2 ppm. In the case where the amount of the titanium compound is higher than 20 ppm, an oligomer is formed as a by-product in the step of melt-extruding the polyester, thus, yielding a film with a high (too high) oligomer content and reduced transparency. The amount of the phosphorus element is usually 1 ppm or more and, preferably, 5 ppm or more, and the upper limit is usually 300 ppm or less and, preferably, 200 ppm or less. Incorporating the titanium and the phosphorus compound in a predetermined amount provides a remarkable effect on the reduction of the oligomer content. In case where the phosphorus compound is in excess of the above range, gelation occurs which may cause a reduction in the film quality. As long as the titanium compound and the phosphorus compound are contained within the range described above, by-production of the oligomer is prevented and the effect of the invention is obtained at a high level.

While the polyester of the invention may also be obtained by melt-polymerizing, a starting material is preferred which is obtained by solid phase polymerization of a polyester which is then cut into chips since this can reduce the amount of the oligomer contained in the starting material. The amount of oligomer contained in the starting polyester material is preferably 0.7% by weight or less, more preferably, 0.5% by weight or less and, particularly preferably, 0.3% by weight or less. When the amount of the oligomer in the starting polyester material is low, the effect of reducing the amount of oligomer in the polyester film and, therefore, likewise the effect of preventing precipitation of the oligomer to the film surface is obtained at a high level.

The amount of oligomer contained in the polyester film of the invention is 0.7% by weight or less and, preferably, 0.5% by weight or less. If the amount of the oligomer in the film exceeds 0.7% by weight, this results in problems such as increase in film haze, deposition and accumulation of the oligomer on a transportation roll which comes into contact with the film during the coating step, etc.

In another embodiment of the invention, the film may have a structure in which a polyester with low oligomer content is coextruded or laminated onto at least one surface of a layer comprising a polyester with a usual (i.e. higher) oligomer content, This sandwich-structure, too, has the effect of suppressing the precipitation of the oligomer to a high degree.

In the invention, the amount of the oligomer precipitated on the film surface when the film is heat treated at 180°C for 10 min is usually 5.0 mg/m² or less and, preferably, 3.0 mg/m² or less and, more preferably, 1.0 mg/m² or less. Further in the invention, the amount of the oligomer on the film surface after coating with methyl ethyl ketone, driving off the methyl ethyl ketone and after a subsequent heat treatment at 180°C for 10 min is 5.0 mg/m² or less, preferably, 3.0 mg/m² or less and, more preferably, 1.0 mg/m² or less.

The amount of oligomer referred to herein means the amount of cyclic trimer (polyester-induced oligomer) measured by a method to be described later. If the precipitated amount of the oligomer on the film surface exceeds 5.0 mg/m², this results in an increase of film haze, deposition and accumulation of the oligomer to a transportation roll which comes into contact with the film during the coating step, etc.

The difference (ΔH) between the film haze (H) after coating with methyl ethyl ketone and driving off the methyl ethyl ketone from the film (drying) and then successively applying a heat treatment at 180°C for 10 min and the film haze (H₀) before coating with methyl ethyl ketone is preferably 5.0% or less, more preferably, 3.0% or less and, particularly preferably, 1.0% or less. If ΔH exceeds 5.0%, the commercial use of the film may be restricted such that it can no longer be used in a field requiring high transparency.

The polyester employed according to the invention may be blended with a weather proof agent (e.g. a UV and/or hydrolysis stabilizer), UV-stabilizer, antistatic agent, lubricant, light shielding agent, antioxidant, fluorescent whitener, matting agent, heat stabilizer, or a colorant such as a dye or pigment in amounts within a range not deteriorating the feature of the invention. Further, fine inert organic or inorganic particles, etc. may be blended with the polyester, e.g., in order to improve the slip property, and abrasion resistance of the film.

Particles which can be blended in the polyester for the film may include, for example, silicon dioxide, alumina, calcium carbonate, kaolinite, titanium dioxide, and fine crosslinked polymeric powder as described in US-A-4,320,207. The particles may be used alone or in combination of two or more. They may be employed in amounts within the range of 1% by weight or less, preferably, from 0.01 to 1% by weight, and, more preferably, from 0.02 to 0.5% by weight (based on the weight of the film layer in which the particles are employed). If the amount of the particles is small, i.e. below 0.01 % by weight, the film surfaces is flattened and the winding property in the film tends to degrade. If the amount of the particles exceeds 1% by weight, the surface roughness of the film surface becomes excessively high, tending to deteriorate the transparency of the film.

The average particle size (diameter) of the particles has no particular restriction and is within a range usually from 0.02 to 5 µm, preferably, 0.02 to 3 µm and, more preferably, 0.02 to 2 µm. If the particle size is less than 0.02 µm, the film surface is fattened tending to deteriorate the winding property of the film. If the particle size exceeds 5 µm, the surface roughness of the film surface becomes excessively high tending to deteriorate the transparency of the film. In the multi layer embodiment of the invention it is preferred to add the particles to the low oligomer polyester of the surface layer in order to improve film transparency.

The method of blending the particles into the polyester has no particular restriction and any known method can be employed. For example, they can be added at any stage of manufacturing of the polyester, and may be added as a slurry in which they are dispersed in ethylene glycol, preferably, at the stage of esterification or at the stage after completion of the ester interchange reaction and before the polycondensating reaction. Alternatively, blending may be accomplished by a method of blending a slurry of particles dispersed in ethylene glycol or water and a starting polyester material by using a kneading extruder having a vent or a method of blending dried particles and the starting polyester material by using a kneading extruder.

The film according to the invention may be made by the process as described herein. However, it is to be understood that the invention is not restricted to this process.

Polyester chips are dried by a known method and are fed to a melt-extruder and then heated to a temperature higher than melting points of respective polymers. Then, the molten polymer is extruded from a die, quenched to a temperature below the glass transition temperature on a rotating cooling drum to solidify, thereby obtaining an un-oriented substantially amorphous sheet. In order to improve the flatness of the sheet, it is preferred to improve the adhesion between the sheet and the rotating cooling drum, e.g. by applying an electrostatic field and/or applying the liquid coating adhesion method both of which are known in the art.

The thus obtained sheet is then stretched in biaxial directions to obtain a film. The unstretched sheet is preferably stretched by a factor of 2 to 6 times in the longitudinal direction at 70 to 145°C and is then stretched by a factor of 2 to 6 times laterally (transversely) at 90 to 160°C, and is then heat treated at 150 to 240°C for 1 to 600 sec. Subsequently, the biaxially oriented film is relaxed by 0.1 to 20% in the longitudinal direction and/or lateral direction, preferably in the highest temperature zone of the heat treatment and/or cleaning zone at the exit of the heat treatment. A second longitudinal stretching or a second lateral (transverse) stretching can be added if required. Instead of the above described subsequent biaxial orientation, it is also possible to simultaneously biaxially stretch the unstretched sheet such that the area enlarging factor is from 10 to 40 times.

It is also possible to apply a so-called inline coating in which the film surface is treated (coated) during or between the stretching steps. Thus, a coating treatment with an aqueous solution, aqueous emulsion, aqueous slurry, etc. may be applied, for example, after completion of the first stretching step and before the second stretching step, e.g. in order to improve the antistatic property, slip property, adhesion, etc. or for improvement of secondary fabrication quality.

A preferred example for the manufacture of the polyester according to the invention will now be described but it is to be understood that the invention is by no means restricted to this method. While in the example polyethylene terephthalate is used as the polyester, one skilled in the art will recognize that manufacturing conditions may vary depending on the polyester used.

At first, in accordance with the customary methods, bis-β-hydroxyethyl terephthalate (EHT) is obtained by esterification of terephthalic acid with ethylene glycol, or by ester interchange between dimethyl terephthalate and ethylene glycol. Then, BHT is transferred to a polymerization vessel, where temperature is raised while pressure is lowered, and finally heating is performed at 280°C in vacuum, to proceed the polymerizing reaction and obtain a polyester.

The intrinsic viscosity of the polyester of the invention is within a range usually from 0.40 to 0.90, preferably, from 0.45 to 0.80 and, more preferably, from 0.50 to 0.70. If the intrinsic viscosity is less than 0.40, the mechanical strength of the film tends to deteriorate and, if the intrinsic viscosity exceeds 0.90, the melt-viscosity increases which may result in a problem of exerting an overload on the extruder or making the process cost ineffective.

Films according to the invention exhibit and generate a reduced amount of oligomer without deteriorating the film properties, which is of high industrial value.

The present invention will now be described in more detail by way of examples. However, it is to be understood that the invention is not limited to these examples. In the examples and comparative examples, "parts" mean "parts by weight".

The following measuring methods have been used in the invention.

### (1) Measurement for intrinsic viscosity of polyester

Polyester (without other polymer incompatible ingredients and pigments) was accurately weighed to 1 g and dissolved in 100 ml of a solvent mixture of phenol/tetrachlorvethane at 50/50 weight ratio, and the intrinsic viscosity was measured at 30°C.

### (2) Average particle size (d50)

The size (diameter) of the particles was measured by the precipitation method according to Stoke's law by using a centrifugal precipitation type grain size distribution measuring device SA-CP3 model manufactured by Shimazu Seisakusho.

### (3) Oligomer (cyclic trimer) content in the polyester film

After dissolving a predetermined amount of a polyester film in a solvent mixture of chloroform/1,1,1,-3,3,3-hexafluoro-2-propanol (mixing ratio: 3/2), it was re-precipitated with chloroform/methanol (znixing ratio: 2 /1) and filtered to remove linear polyethylene terephthalate, then the solvent in the obtained liquid filtrate was evaporated using an evaporator, and the obtained precipitate was dissolved in a predetermined amount of DMF. The obtained DMF solution was supplied to a liquid chromatograph (Shimazu LC-7A) to determine the amount of oligomer (cyclic trimer) contained in the polyester, the value was divided by the amount of the polyester used for the measurement to define it as an amount of the oligomer (recyclic trimer) contained in the polyester film. The amount of the oligomer (cyclic trimer) obtained by liquid chromatography was determined by the peak area ratio between the peak area for a standard specimen and the peak area for the measured specimen (absolute calibration line method) . The standard specimen was prepared by accurately weighing previously sampled oligomer (cyclic trimer) and dissolving it in accurately weighed DMF (dimethyl formamide).

The conditions for liquid chromatography were as described below.
Mobile phase A: acetonitrile
Mobile phase B: 2% aqueous solution of acetic acid
Column: MCI GEL CDS 1HU, manufactured by Mitsubishi Chemical Co.
Column temperature: 40°C
Flow rate: 1 ml/min
Detection wavelength: 254 nm

### (4) Amount of oligomer on the film surface after solvent treatment

Methyl ethyl ketone was spread out on the surface of a polyester film, and removed (evaporated) in a hot air circulation oven under a nitrogen atmosphere at 120°C for one min. Then the polyester film was treated in a hot air circulation oven under a nitrogen atmosphere at 180°C for 10 min. The surface of the polyester film after the heat treatment was then brought into contact with DMF for 3 min, and the oligomer which was precipitated to the surface was dissolved. For this method, a method described for leaching instruments used for a single side leaching method in a leaching test according to the voluntary standard regarding food container packages made of synthetic resin such as polyolefin can be adopted.

Then, the concentration of the obtained DMF solution was controlled (e.g. by a method such as dilution), and the solution was supplied to a liquid chromatograph (Shimazu LC-7A) to determine the amount of the oligomer in DMF. The obtained value was divided by the area of the film in contact with DMF to define it as the amount of the oligomer on the surface (mg/m²). The amount of the oligomer in DMF was determined based on the peak area ratio between the peak area for a standard specimen and the peak area for the measured specimen (absolute calibration line method).

The standard specimen was prepared by accurately weighing a previously sampled oligomer (cyclic trimer) and dissolving it in an accurately weighed DMF (dimethyl formamide). The concentration of the standard specimen is preferably within a range from 0.001 to 0.01 mg/ml.

The conditions for liquid chromatography were as described below.
Mobile phase A: acetonitrile
Mobile phase B: 2% aqueous solution of acetic acid
Column: MCI GEL CDS 1HU, manufactured by Mitsubishi Chemical Co.
Column temperature: 40°C
Flow rate: 1 ml/min
Detection wavelength: 254 nm

### (5) Film Haze (H)

A polyester film which was kept in an oven under a nitrogen atmosphere at 180°C for 60 min was measured for the turbidity of the film by an integrating sphere type turbidmeter NDH-29D manufactured by Nippon Denshoku Kogyo Co. according to JIS-K7105. The difference of film haze (ΔH) between before and after coating with the solvent (methyl ethyl ketone) described above was determined by measuring the respective samples under the conditions described above.

### (6) Quantitative determination of the amount of metal element and the amount of phosphorus element in the film

The amounts of elements in the film are determined by a film FP method using a fluorescence X-ray spectrometer (model "XRF-1500", manufactured by Shimazu Seisakusho Co.) under the conditions shown in the following Table 1. The detection limit of this method is usually about 1 ppm.

**Table 1**

| | Sb | Ti | P |
|---|---|---|---|
| X-ray tube target | Rh 4.0 kW | Rh 4.0 kW | Rh 4.0 kW |
| Voltage (kV) | 40 | 40 | 40 |
| Current (mA) | 95 | 95 | 95 |
| Analyzing crystal | LiF | LiF | LiF |
| Detector | EPC | SC | EPC |
| 2e(deg) | 117.34 | 86.14 | 141.03 |
| Measuring time (sec) two point back ground, each 20 sec | 40.0 | 40.0 | 40.0 |

### Example 1

100 parts by weight of dimethyl terephthalate and 60 parts by weight of ethylene glycol were used as starting material, tetrabutoxy titanate was added as a catalyst, they were charged in a reactor, the reaction starting temperature was set to 150°C and the reaction temperature was elevated gradually along with distilling off of methanol up to 230°C after three hours. The ester interchange reaction was substantially completed after 4 hours. The reaction mixture was transferred to a polycondensation vessel, silica particles of an average particle size of 2.5 µm in an ethylene glycol slurry were added such that the content of the particles in the polyester was 0.06% by weight and the polycondensation reaction was conducted for 4 hours. The temperature was gradually raised from 230°C to 280°C. At the same time, the pressure was gradually reduced from ambient pressure finally to 0.3 mmHg. The reaction was terminated when the intrinsic viscosity reached 0.55 which was monitored by the change of the agitation power of the reaction vessel. The polymer was then discharged under a nitrogen pressure, to obtain polyester chips (AO). The intrinsic viscosity was 0.55. The obtained polyester chips were subjected to solid phase polymerization in vacuum at 220°C, to obtain a polyester (A1) at an intrinsic viscosity of 0.67.

In a second reaction, 100 parts by weight of dimethyl terephthalate and 60 parts by weight of ethylene glycol were used as starting material and a magnesium acetate tetrahydrate salt was added as a catalyst. This mixture was charged into a reaction vessel. The reaction starting temperature was set to 150°C, and the reaction temperature was gradually raised along with distilling off of methanol to 230°C after three hours. After 4 hours, the ester interchange reaction was substantially completed. The reaction mixture was transferred into a polycondensation vessel and, after addition of normal phosphoric acid, germanium dioxide was added and a polycondensation reaction was conducted for 4 hours. The temperature was raised from 230°C gradually to 280°C. At the same time, the pressure was gradually lowered from ambient pressure finally to 0.3 mmHg. The reaction was terminated when the intrinsic viscosity reached 0.63 which was monitored by the change of the stirring power of the reaction vessel. The polymer was discharged under a nitrogen pressure to obtain chips of a polyester (B). The intrinsic viscosity of the polyester (B) was 0.63.

A starting material formed by blending chips of polyester (A1) and chips of polyester (B) at a ratio of 95 parts by weight and 5 parts by weight respectively was melt-extruded at 290°C by a twin-screw extruder having a vent, and quenched to solidify on a cooling roll set to a surface temperature of 40°C by using the electrostatic pinning method to obtain an unstretched sheet. Then, after stretching at 83°C 3.7 times in the longitudinal direction, it was guided to a tenter, stretched at 110°C 3.9 times in the lateral direction, further, applied with a heat treatment at 220°C to obtain a polyester film of 25 µm thickness.

The amount of the oligomer was 0.44% by weight and the content of antimony, titanium and phosphorus elements were 0 ppm (less than detection lower limit value), 5 ppm, 50 ppm respectively in the obtained film.

### Example 2

A polyester (A2) of an intrinsic viscosity of 0.68 was obtained by the same method as described for the polyester chip (A1)except for changing the time for the solid phase polymerization in Example 1. A polyester film was obtained by the same method as in Example 1 except for changing the polyester chip (A1) to the polyester chip (A2).

### Examples 3, 6, and 7

A polyester (A3) with an intrinsic viscosity of 0.70 was obtained from the polyester chip (A0) obtained in Example 1 by the same method as for the polyester chips (A1) and (A2) except for changing the time for the solid phase polymerization.

A polyester film was obtained by the same method as in Example 1 except for using the polyester chips (A3) instead of the polyester chips (A1) used in Example 1 and changing the amount of the oligomer and the amount of the titanium and phosphorus elements in the obtained film as shown in the following Table 2. The quality of the film of Example 6 was somewhat poor, which was probably attributable to gel formation. The film of Example 6 could not be used in high level applications.

### Example 4

The polyester (A1) described in Example 1 was melt-extruded at 290°C by a twin-screw extruder having a vent and cooled to solidify on a cooling roll set to a surface temperature of 40°C by using an electrostatic pinning device to obtain an unstretched sheet. Then, after stretching at 83°C 3.7 times in the longitudinal direction, it was transferred to a tenter, stretched at 110°C 3,9 times in the lateral direction, and then heat treated at 220°C, to obtain a polyester film of 25 µm thickness. The amount of oligomer, and the amount of titanium and phosphorus elements in the obtained film were as shown in Table 2.

### Example 5

A polyester film was obtained in the same manner as in Example 4 except for changing the polyester chip (A1) used in Example 4 to the polyester chip (A3).

### Comparative Example 1

A polyester film was obtained in the same manner as in Example 4 except for changing the polyester chip (A1) used in Example 4 to the polyester chip (A0).

### Comparative Example 2

A polyester film was obtained in the same manner as in Example 1 except for changing the polyester chip (A1) used in Example 1 to the polyester chip (A0).

### Comparative Example 3

100 parts by weight of dimethyl terephthalate and 60 parts by weight of ethylene glycol were used as the starting material; magnesium acetate tetrahydrate salt was added as a catalyst, and the mixture was charged to a reaction vessel. The reaction starting temperature was set to 150°C, and the reaction temperature was gradually raised to 230°C after three hours along with distilling off of methanol. After 4 hours, the ester interchange reaction was substantially completed. After adding ethyl acid phosphate (= mixture of mono- and diethyl phosphate) to the reaction mixture, it was transferred to a polycondensation vessel. Silica particles with an average particle size of 2.5 µm as a slurry in ethylene glycol were added such that the content of the particles in the polyester was 0.06% by weight, antimony trioxide was added and polycondensation reaction was conducted for 4 hours. The temperature was gradually raised from 230°C to 280°C. At the same time the pressure was gradually reduced from ambient pressure finally to 0.3 mmHg. The reaction was terminated when the intrinsic viscosity reached 0.63 which was monitored by the change of the stirring power of the reaction vessel. The polymer was then discharged under a nitrogen pressure to obtain chips of the polyester. The intrinsic viscosity of the polyester was 0.63. The obtained polyester chips were subjected to solid phase polymerization at 220°C in vacuum, to obtain a polyester (C) with an intrinsic viscosity of 0.67.

The polyester (C) described above was melt-extruded at 290°C by a twin-screw extruder having a vent and cooled to solidify on a cooling roll set to a surface temperature of 40°C by using an electrostatic pinning device to obtain an unstretched sheet. Then, after stretching 3.7 times in the longitudinal direction at 83°C, it was guided to a tenter, stretched 3,9 times in the lateral direction at 110°C, and then heat treated at 220°C, to obtain a polyester film of 25 µm thickness. The amount of the oligomer, and the amount of titanium and phosphorus elements in the obtained film were as shown in Table 2.

**Table 2**

| | Amount of oligomer in film [wt%] | Sb content [ppm] | Ti content [ppm] | P content [ppm] |
|---|---|---|---|---|
| Example 1 | 0.44 | 0 | 5 | 50 |
| Example 2 | 0.40 | 0 | 5 | 50 |
| Example 3 | 0.32 | 0 | 5 | 50 |
| Example 4 | 0.43 | 0 | 5 | 5 |
| Example 5 | 0.36 | 0 | 5 | 5 |
| Example 6 | 0.32 | 0 | 5 | 350 |
| Example 7 | 0.32 | 0 | 25 | 50 |
| Comp. Example 1 | 0.71 | 0 | 5 | 5 |
| Comp. Example 2 | 0.71 | 0 | 5 | 50 |
| Comp. Example 3 | 0.45 | 300 | 0 | 120 |

**Table 3**

| | Amount of oligomer on the surface after solvent treatment [mg/m²] | Δ H |
|---|---|---|
| Example 1 | 0.35 | 0.65 |
| Example 2 | 0.23 | 0.40 |
| Example 3 | 0.10 | 0.18 |
| Example 4 | 0.68 | 0.87 |
| Example 5 | 0.30 | 0.60 |
| Example 6 | 0.98 | 0.25 |
| Example 7 | 1.00 | 3.22 |
| Comp. Example 1 | 2.24 | 9.42 |
| Comp. Example 2 | 2.33 | 5.97 |
| Comp. Example 3 | 1.02 | 5.10 |

The film of the invention can be used in various kinds of applications, for example, those requiring excellent transparency, fabrication characteristics, etc.

## Claims

1. A polyester film comprising a substantially antimony-free polyester, wherein the amount of oligomer in the film is 0.7% by weight or less based on the weight of the film, and wherein the amount of the oligomer on the surface of the film is 5.0 mg/m² or less after coating the film with methyl ethyl ketone driving off the methyl ethyl ketone and subsequently heating the film to 180°C for 10 min.

2. The polyester film according to claim 1, wherein the film contains at least one compound selected from titanium compounds and phosphorus compounds.

3. The polyester film according to claim 1 or 2, wherein the film is a monolayered film or a multilayered film comprising a base layer and at least one cover layer.

4. The polyester film according to claim 3, wherein the film is multilayered and wherein the amount of oligomer in the cover layer is 0.7% by weight or less based on the weight of the cover layer, and wherein the amount of the oligomer on the surface of the film is 5.0 mg/m² or less after coating the film with methyl ethyl ketone driving off the methyl ethyl ketone and subsequently heating the film to 180°C for 10 min.

5. The polyester film according to any one of claims 1-4, wherein the difference (ΔH) between the film haze (H) after coating with methyl ethyl ketone and driving off the methyl ethyl ketone from the film (drying) and then successively applying a heat treatment at 180°C for 10 min and the film haze (H₀) before coating with methyl ethyl ketone is 5.0% or less.

6. The polyester film according to one of claims 1-5, wherein the film contains a one or more of the following substances: weather proof agent, UV-stabilizer, antistatic agent, lubricant, light shielding agent, antioxidant, fluorescent whitener, matting agent, heat stabilizer, colorant.

7. The polyester film according to one of claims 1-6, wherein the film contains organic or inorganic particles.

8. A process for the manufacture of a polyester film according claim 1, wherein a substantially antimony-free polyester which exhibits an oligomer content of 0.7% by weight or less (based on the weight of the polyester) is melt extruded onto a cooling drum, biaxially oriented and heat set.
